# EUROPÄISCHE PATENTSCHRIFT

(11) **EP 0 979 568 B1**
(45) Veröffentlichungstag und Bekanntmachung des Hinweises auf die Patenterteilung: **12.09.2007**
(21) Anmeldenummer: 98922717.8
(22) Anmeldetag: 15.04.1998
(51) Int. Cl.: H04L 29/06

(54) **VERFAHREN ZUR ÜBERTRAGUNG VON INFORMATIONEN**
METHOD FOR TRANSFERRING INFORMATION
PROCEDE POUR TRANSMETTRE DES INFORMATIONS

(30) Priorität: 29.04.1997 DE 19717948
(43) Veröffentlichungstag der Anmeldung: 16.02.2000
(73) Patentinhaber: Deutsche Telekom AG, 53113 Bonn (DE)
(72) Erfinder: DASSOW, Heiko, D-64347 Griesheim (DE); FROHNHOFF, Birgit, D-64295 Darmstadt (DE); TERLINDE, Egbert, D-64390 Erzhausen (DE)
(86) Internationale Anmeldenummer: PCT/EP1998/002204
(87) Internationale Veröffentlichungsnummer: WO 1998/049806

(56) Entgegenhaltungen:
- T.BERNERS-LEE ET AL: "RFC 1945. HYPERTEXT TRANSFER PROTOCOL - HTTP 1.0" WWW.IETF.ORG,Mai 1996, Seiten 1-60, XP002088717
- "CMIP: COMMON MANAGEMENT INFORMATION PROTOCOL DER OSI" NTZ NACHRICHTENTECHNISCHE ZEITSCHRIFT, Bd. 48, Nr. 6, 1. Juni 1995, Seiten 16-19, XP000523111

## Beschreibung

Die Erfindung betrifft ein Verfahren zur Übertragung von Informationen, deren Aufbau durch die mit Abstrakte Syntax-Notation Eins (ASN.1) bezeichnete formale Sprache zur Definition von Datenstrukturen definiert ist.

Es wird auf folgende Literatur Bezug genommen:
- [NMFTR107]: Network Management Forum
Forum TR107: ISO/CCITT and Internet Management: Coexistence and Interworking Strategy
Issue 1.0 September 1992
- [M.3010]: ITU-T Recommendation M.3010
Maintenance: Telecommunications Management Network
Principles for a Telecommunications Management
Network 10/92
- [X.160]: ITU-T Recommendation X.160
Data Networks and Open System Communications Public Data Networks - Maintenance
Architecture for Customer Network Management
Service for Public Data Networks 7/94

- [X.200]: Data Networks and open system communications
Open System Interconnection - Model and Notation
Information Technology - Open System Interconnection
Basic Reference Model
Geneva, 1994
- [X.208]: ITU-T Recommendation X.208
Specification of abstract syntax notation one (ASN.1)
Information technology
Open System Interconnection 1988
- [X.209]: ITU-T Recommendation X.209
Specification of Basic Encoding Rules for
Abstract Syntax Notation One (ASN.1)
- [X.710]: ITU-T Recommendation X.710
Data Communication Networks
Open Systems Interconnection
Common Management Information Service Definition for CCITT Applications
Geneva, 1991
- [X.711]: ITU-T Recommendation X.711
Data Communication Networks
Open Systems Interconnection
Common Management Information Protocol Specification for CCITT Applications
Geneva, 1991
- [X.722]: ITU-T Recommendation X.722
Data Communication Networks
Open Systems Interconnection
Structure of Management Information Guidelines for the Definition of Managed Objects
Geneva, 1992
- [RFC1157]: Network Working Group RFC 1157
Simple Network Management Protocol(SNMP)
- [RFC1085]: Network Working Group RFC 1085
ISO Presentation Services on top of TCP/IP-based internets
M. Rose, Performance Systems International
K. McCloghrie, Hughes LAN Systems
December 1988
- [RFC1189]: Network Working Group RFC 1189
Common Management Information Services and Protocols for the Internet (CMOT and CMIP).
U.S. Warrier, L. Besaw, L. LaBarre, B.D. Handspicker.
historic protocol, not recommended status
Oct-01-1990.
- [RFC1214]: Network Working Group RFC 1214
OSI Internet Management: Management Information Base
L. Labarre
historic protocol, not recommended status
April 1991
- [RFC0793]: Network Working Group RFC 0793
Transmission Control Protocol
J. Postel. September 1981
OSI Abstract-Data Manipulation API (XOM)
CAE Specification
Issue 3
x/Open Company Ltd
ISBN 1 85912 175 6

Ferner werden folgende Abkürzungen verwendet:

| | | |
|---|---|---|
| ASN.1 | Abstract Syntax Notation One | [X.208] |
| BER | Basic Encoding Rules | [X.209] |
| CMIP | Common Management Information Protocol | [X.711] |
| CMIPDU | Common Management Information Protocol Data Unit | [X.711] |
| CMIS | Common Management Information Service | [X.710] |
| CNM | Customer Management Network | [X.160] |
| DCF | Data Communication Function | |
| DCN | Data Communication Network | |
| GDMO | Guidelines for the Definition of Managed Objects | [X.722] |
| OSI | Open System Interconnection | [X.200] |
| SNMP | Simple Network Management Protocol | [RFC1157] |
| TCP/IP | Transmission Control Protocol / Internet Protocol | [RFC0793] |
| TMN | Telecommunication Management Network | [M.3010] |
| XOM | X-OPEN, Interface for handling ASN.1 | |

Die Abstrakte Syntax-Notation Eins (Abstract Syntax Notation 1 (ASN.1) [X.208] dient zur formalen Spezifikation von Datentypen. Sie wird unter anderem zur plattformunabhängigen Definition verschiedener Dienste und Protokolle des OSI-7-Schichtenmodells (Open System Interconnection [X.200]) verwendet. Damit die gespeicherte Information, deren Struktur durch ASN.1 festgelegt ist, übertragen werden kann, gibt es eine Reihe von Verfahren, wie zum Beispiel die Basic Encoding Rules (BER) [X.209], zur Codierung von ASN.1 Werten. Die BER-codierte Information kann dann mit Hilfe eines beliebigen Verfahrens binär übertragen werden. In der Regel werden hierfür Übertragungsprotokolle aus der TCP/IP oder OSI Familie benutzt.

Zur Zeit gilt die Übertragung der verschiedenen in ASN. 1 definierten Protocol Data Units (PDU) der Schicht 7 des OSI-7-Schichtenmodells mit Hilfe eines rein OSI-basierten Protokollstacks als sehr aufwendig. Aus diesem Grunde wird häufig entweder auf die Verwendung dieser Protokolle verzichtet, oder die unteren Schichten des OSI-Protokollstacks werden durch ein bereits vorhandenes TCP/IP Protokoll ersetzt. Beispielhaft für eine Reihe dieser Verfahren sei hierfür das CMIP over TCP/IP (CMOT) [RFC1189] erwähnt.

Aufgabe der Erfindung ist es, diese Nachteile bei der binären Übertragung von Informationen, deren Struktur durch ASN.1 festgelegt ist, zu vermeiden.

Die Aufgabe wird erfindungsgemäß dadurch gelöst, daß die Übertragung in als Text codierter Form erfolgt. Vorzugsweise ist dabei vorgesehen, daß eine Klartext-Codierung erfolgt, bei der der codierte Inhalt ohne Hilfsmittel lesbar ist.

Die Vorteile des erfindungsgemäßen Verfahrens beruhen im wesentlichen darauf, daß textorientierte Übertragungsprotokolle in der Regel sehr weit verbreitet und damit entsprechend kostengünstiger als binäre Übertragungsverfahren sind. Zusätzlich ist die Fehlersuche bei Klartextcodierung wesentlich einfacher zu realisieren, wodurch die Implementierungskosten für eine konkrete Anwendung deutlich geringer ausfallen. Die Vorteile sind im einzelnen:
- Durch die starke Verbreitung textorientierter Übertragungsprotokolle, wie zum Beispiel eMail, ist die Zahl der Rechner, die mit diesem Protokoll erreicht werden können, deutlich größer als bei binären Übertragungsverfahren.
- Sogenannte Firewalls zur Abgrenzung eines firmeninternen Netzes sind häufig nur für textorientierte Übertragungsprotokolle offen.
- Zur Fehlersuche in den codierten ASN.1-Informationen werden keine zusätzlichen Werkzeuge gebraucht, da die Codierung in für Menschen lesbarer Form vorliegt.
- Durch die Verwendung sehr einfacher Protokolle werden an die zur Codierung und Übertragung benötigte Rechenleistung keine großen Anfordungen gestellt, wodurch sich auch einfache PCs für diesen Zweck eignen.
- Sende- und Empfangseinrichtungen brauchen keinen komplexen Protokollstack zu beinhalten. Die erforderliche Software für textorientierte Übertragungsverfahren ist in vielen Betriebssystemen bereits vorhanden.

Im Gegensatz zu der BER-Codierung ist es bei dem erfindungsgemäßen Verfahren möglich, die empfangenen Daten zu decodieren, ohne auf eine applikationsinterne Referenz der ASN. 1-Definition zugreifen zu müssen.

Eine besonders vorteilhafte Weiterbildung des erfindungsgemäßen Verfahrens besteht darin, daß zu jeweils einer zu übertragenen Information die Bezeichnung des jeweils nach ASN.1 definierten Datentyps übertragen wird, wobei vorzugsweise vorgesehen ist, daß die Bezeichnung vorangestellt und durch ein vorgegebenes Trennzeichen, insbesondere ein Gleichheitszeichen, von der Information getrennt wird.

Durch diese Weiterbildung wird eine für den Benutzer besonders vorteilhafte Handhabung des erfindungsgemäßen Verfahrens dadurch ermöglicht, daß die als Text codierte Form der Information mit Hilfe einer standardmäßig verfügbaren Ausgabeeinrichtung darstellbar ist. Ebenso ist eine Eingabe durch den Benutzer sowie eine dauerhafte Speicherung der als textcodierten Informationen in einfacher Weise möglich.

Als Protokoll für das Management öffentlicher Telekommunikationsnetze - im folgenden auch Netze genannt - wird zukünftig hauptsächlich CMIP [X.711] verwendet werden. Telekommunikationsnetze können in diesem Zusammenhang Netze zur Sprach-, Daten- und Bildübertragung sein. Der Aufbau der CMIPDU ist mit Hilfe von ASN.1 formal definiert worden. Die mittels CMIPDUs übertragene Managementinformation ist entsprechend der Basic Encoding Rules codiert. Insbesondere bei langen Distanzen oder aufgrund von hohen Qualitätsanforderungen kann auf die Vorteile eines OSI-Protokollstacks zur Übertragung der CMIP basierten Managementinformationen nicht verzichtet werden. Daneben gibt es aber auch Einsatzzwecke, für die eine wesentlich einfachere und kostengünstigere Lösung zur Übertragung von Managementinformationen ausreichend ist. Neben der Umsetzung von CMIP auf das in lokalen Netzen weitverbreitete SNMP ist auch die Übertragung von CMIP über das - gegenüber den OSI-Protokollen der unteren Protokollschichten - technisch einfachere TCP/IP eine derzeit praktizierte Möglichkeit.

Bei einer anderen Weiterbildung des erfindungsgemäßen Verfahrens ist daher vorgesehen, daß die mittels CMIP zu übertragenen Informationen das Management öffentlicher Telekommunikationsnetze betreffen. Bei dieser Weiterbildung ist es letztlich unerheblich, ob die hierfür verwendete Klartextcodierung auf der Tatsache beruht, daß das CMIP in ASN.1 definiert wurde, oder ob die textorientierten Codierregeln unabhängig von dieser Tatsache erstellt wurden.

Außer den bereits aufgezählten Vorteilen des erfindungsgemäßen Verfahrens ist durch diese Weiterbildung, nämlich die textorientierte Übertragung des CMIP, möglich, das CMIP auch dort einzusetzen, wo die aufwendige Übertragung über eine OSI-Protokollstack aus Kostengründen nicht sinnvoll ist.

Betreiber öffentlicher Netze werden in Zukunft ihren Kunden eine Managementschnittstelle zur verfügung stellen, über die die Kunden Managementoperationen, die den Teil des von ihnen gemieteten öffentlichen Netzes betreffen, veranlassen können. Über diese Schnittstelle können dann alle Daten, die die Kunden mit dem Netzbetreiber austauschen möchten, übertragen werden.

Ein Beispiel hierfür sei das Anfordern einer Standleitung zwischen Standort A und B eines kunden-eigenen Netzes. Beide Standorte sind über das öffentliche Netz miteinander zu verbinden. Hierzu ist bei einer anderen Weiterbildung des erfindungsgemäßen Verfahrens vorgesehen, daß die Informationen zwischen einem Teilnehmer und einem öffentlichen Netz beziehungsweise dessen Managementsystemen übertragen werden und ein vom Teilnehmer durchzuführendes Management des Netzes betreffen.

Die Erfindung kann insbesondere derart ausgestaltet werden, daß eine eMail-Schnittstelle für die textcodierten Informationen gebildet wird. Durch diese Weiterbildung wird Kunden eine kostengünstige, aber trotzdem zuverlässige Schnittstelle zum Netzbetreiber angeboten. Dabei muß nicht auf die Vorteile von CMIP als Managementprotokoll verzichtet werden.

Durch eine solche Schnittstelle zwischen kunden-eigenem Managementsystem und dem Managementsystem des Netzbetreibers wird es dem Kunden ermöglicht, Managementoperationen nicht nur auf sein lokales Netz beschränkt auszuführen, sondern auch den von ihm genutzten Teil des öffentlichen Netzes miteinzubeziehen. Man bezeichnet dies als Customer Network Management. Eine typische Anwendung hierfür liegt zum Beispiel in der kundenindividuellen Konfiguration des Netzes. Weiterhin gehören auch das sofortige Melden erkannter Fehler an den Kunden und die zur Verfügungstellung bestimmter statistischer Daten zu dem Themenbereich des CNM.

Eine weitere Ausgestaltung der Erfindung besteht darin, daß durch die Verwendung von Zeichentabellen zur Codierung und Decodierung der Information eine einfache und flexible Anpassung an den beschränkten Zeichenvorrat des Übertragungssystems möglich ist. Wenn beispielsweise ein Übertragungsprotokoll nicht in der Lage ist, das "{"- und "}"-Zeichen zu übertragen, so kann statt dessen ein anderes charakteristisches Zeichen verwendet werden, ohne daß die Codierregeln grundsätzlich abgeändert werden müssen. Durch die parallele Verwendung unterschiedlicher Zeichentabellen ist es somit ohne zusätzlichen technischen Aufwand möglich, mehrere Übertragungsmedien mit unterschiedlichen Zeichensätzen innerhalb einer Applikation zu unterstützen.

Eine andere Weiterbildung des erfindungsgemäßen Verfahrens besteht darin, daß das Codieren und Versenden der Managementinformationen sowie das Empfangen und Decodieren derselben automatisch erfolgen.

Im Bereich des Netzanbieters ist dann jederzeit eine automatische Umsetzung der textorientierten Übertragung auf einen OSI-Protokollstack möglich. Vorteil dieser Architektur ist, daß nicht jeder Kunde einen eigenen OSI-Stack administrieren muß, sondern daß der Netzbetreiber diesen Dienst zentral für alle Kunden anbietet.

Ausführungsbeispiele der Erfindung sind in der Zeichnung anhand mehrerer Figuren dargestellt und in der nachfolgenden Beschreibung näher erläutert. Es zeigt:
- Fig. 1: ein erstes Ausführungsbeispiel einer Einrichtung zur Durchführung des erfindungsgemäßen Verfahrens,
- Fig. 2: ein zweites Ausführungsbeispiel, ebenfalls als Blockschaltbild,
- Fig. 3: eine schematische Darstellung des Managements eines von einem Teilnehmer genutzten Teils eines öffentlichen Telekommunikationsnetzes und
- Fig. 4: eine schematische Darstellung einer textorientierten Übertragung CMIP-basierter Managementinformationen zwischen CNM-Kunde und Netzbetreiber.

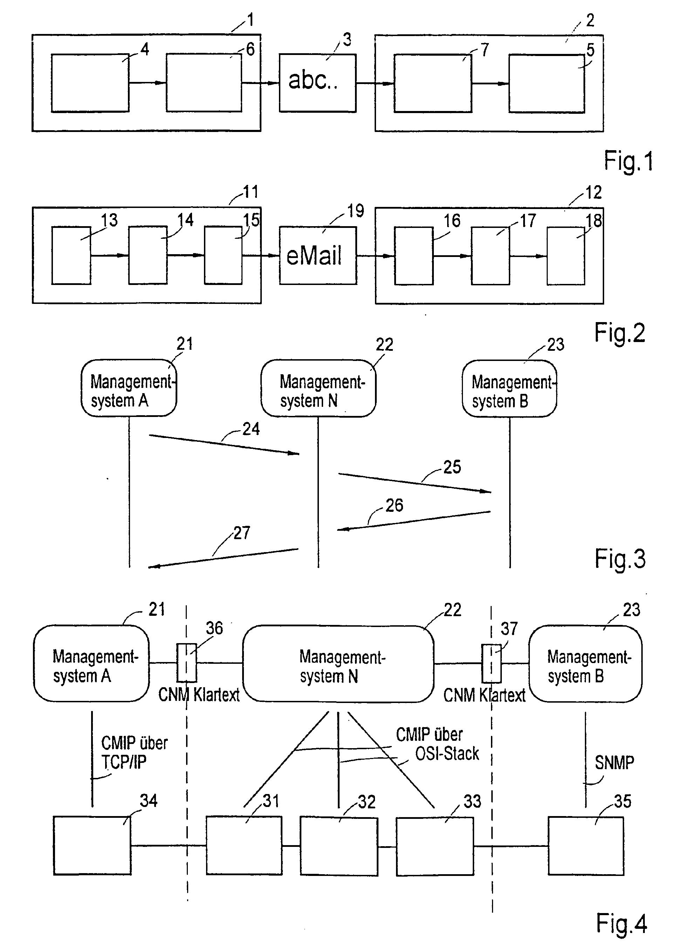

Bei dem Ausführungsbeispiel nach Fig. 1 sind zwei Managementsysteme 1 und 2 zum Austausch von Informationen über ein textorientiertes Übertragungssystem 3 miteinander verbunden. Die zu übertragende Nutzinformation kann innerhalb der Sende- und Empfangsapplikation 4, 5 bei den Managementsystemen 1, 2 in unterschiedlichen proprietären Datenformaten vorliegen. Der Aufbau dieser Datenformate wird durch die Werkzeuge bestimmt, die bei der Erstellung der Applikationen verwendet werden. Bei 6, 7 wird diese Nutzinformation gemäß ASN. 1 und zusätzlich gemäß dem erfindungsgemäßen Verfahren codiert bzw. decodiert.

Fig. 2 zeigt eine mögliche Realisierung der in Fig. 1 dargestellten Architektur. von in einem ersten Managementsystem 11 bei 13 vorliegenden C-Datenstrukturen werden Informationen zum Managementsystem 12 übertragen, wo sie als C/C++-Datentypen bei 18 abgelegt werden.

Die bei 13 vorliegenden Informationen werden zunächst einer XOM-Schnittstelle 14 zugeführt und dort als XOM-Objekte codiert, damit sie gemäß ASN.1 zu handhaben sind. Diese Objekte werden dann mit dem erfindungsgemäßen Verfahren in textorientierte Übertragungsprotokolle umgewandelt, die als eMail 19 übertragen und vom Managementsystem 12 empfangen werden. Dort werden sie zunächst bei 16 decodiert und in C++-Objekte umgewandelt und danach bei 18 als C/C++-Datentypen abgelegt.

Fig. 3 zeigt ein Scenario bei der Anforderung eines Kunden an den Betreiber eines öffentlichen Netzes, zwei Standorte A, B mit einer Standleitung zu verbinden. Der Kunde setzt dazu über sein Managementsystem 21 am Standort A eine entsprechende Anforderung 24 an das Managementsystem 22 des Netzbetreibers N ab. Dieses prüft die Anfrage auf Realisierbarkeit im eigenen Netz und gibt sie dann an das Managementsystem 23 am Standort B des Kunden weiter (25). Sobald von dort die Meldung 26 eintrifft, daß der zugehörige Teil der Standleitung erfolgreich eingerichtet werden konnte, wird die zugehörige Durchschaltung im öffentlichen Netz erstellt und das Ergebnis "Leitung eingerichtet" dem Standort A mitgeteilt (27).

Fig. 4 verdeutlicht die textorientierte Übertragung CMIP-basierter Managementinformation zwischen einem CNM-Kunden und dem Netzbetreiber. Das Managementsystem 21 am Standort A und das Managementsystem 23 am Standort B des Kunden sind mit dem Managementsystem 22 des Netzbetreibers N über je eine CNM-Schnittstelle 36, 37 verbunden, über die jeweils nach dem erfindungsgemäßen Verfahren klartext-codierte Informationen übertragen werden.

Die Managementsysteme 21, 23 des Kunden haben jeweils Zugriff auf die Netzelemente 34, 35 des Kunden. Dieses erfolgt beispielsweise am Standort A mit Hilfe von CMIP über TCP/IP, während am Standort B SNMP verwendet wird. Das Managementsystem 22 des Netzbetreibers N, dessen Domäne in Fig. 4 durch gestrichelte Linien angedeutet ist, hat Zugriff auf die Netzelemente 31 bis 33 des öffentlichen Netzes. Dieses erfolgt mit CMIP über einen 7-Schichten-OSI-Protokollstack.

Der Netzbetreiber N bietet dem Kunden einen CNM-Dienst an, womit der Kunde eine eigene oder vom Netzbetreiber zur Verfügung gestellte Management-Applikation nutzen kann, um seine Management-Anforderungen an das Managementsystem 22 des öffentlichen Netzes weiterzuleiten. Die zu übertragene Managementinformation wird beim Kunden innerhalb seiner Management-Applikation automatisch klartext-codiert und über ein textorientiertes Protokoll an das Managementsystem 22 des Netzbetreibers übertragen. Entweder wird diese Nachricht automatisch durch das Managementsystem 22 des Netzbetreibers bzw. CNM-Dienste-Anbieters empfangen und direkt weiterverarbeitet oder es findet bei 36 und 37 eine Umsetzung auf einen OSI-Protokollstack und eine OSI-basierte Übertragung zu dem Managementsystem des Netzbetreibers statt.

Auch die Übermittlung von Managementinformationen an die Managementsysteme 21, 23 des Kunden kann in vorteilhafter Weise mit dem erfindungsgemäßen Verfahren durchgeführt werden. Hierbei wird durch den Netzbetreiber N automatisch eine in Textform codierte Nachricht an den Kunden weitergeleitet. Die Management-Applikation des CNM-Kunden empfängt und decodiert diese Textnachricht automatisch, um die übertragene Managementinformation weiterzuleiten.

Die erfindungsgemäße ASN. 1-Codierung erfolgt nach einem festen Verfahren. Für jeden ASN. 1-Typen wird grundsätzlich zuerst der Tag in Form eines sprechenden an die ASN.1-Norm angelehnten Namens (z.B. "INTEGER" für den Universal Tag 2) codiert, dann ein "="-Zeichen als Trennelement eingefügt. Anschließend wird der Wert in der für diesen Typ festgesetzten Art und Weise codiert. Falls ein ASN.1-Datentyp seinerseits aus anderen Datentypen zusammengesetzt ist, werden bei seiner Wert-Codierung auch die Tags und Werte der enthaltenen Datentypen codiert.

Es werden zwei Varianten für die Codierregeln definiert, die beide Gegenstand dieses Patentanspruches sind. Die Standardvariante reicht zur Codierung der ASN. 1-Version vollkommen aus und ist entsprechend einfach zu implementieren. Bei der erweiterten Variante wird der Codetext mit zusätzlichen Informationen versehen, die aus der ASN.1-Typendefinition entnommen werden. Hierdurch wird die Fehlersuche sowohl gegenüber der Standardvariante der Klartextcodierung als auch gegenüber der binär-codierten Form deutlich vereinfacht. Jedoch erhöht die Verwendung der erweiterten Variante den Implementierungsaufwand bei der Applikationsentwicklung. Daher ist es auch zulässig, nur einzelne Teile der erweiterten Codierung zu verwenden, sofern dieses im Sender und Empfänger konsistent geschieht. Soweit für die Codierung eines speziellen Datentypes die erweiterte Codiervariante vorgesehen ist, wird diese im folgenden bei den zugehörigen Datentypen erklärt.

In den folgenden Abschnitten werden jeweils bei der Beschreibung der Codierregeln für die einzelnen Datentypen die zugehörige ASN.1-Definition und ein oder mehrere Beispiele für die Codierung angegeben.

### BOOLEAN

Die Codierung eines Boolean-Datentypes erfolgt, indem für den Typ der Text "BOOLEAN" und für den Wert wahlweise die Texte "TRUE#" oder "FALSE#" codiert werden:

| ASN. 1-Definition | Codierung (mehrere Beispiele) |
|---|---|
| Bol ::= BOOLEAN | BOOLEAN=TRUE# |
| | BOOLEAN=FALSE# |

### INTEGER

Ein Integerwert wird durch den Text "INTEGER" gekennzeichnet und der zugehörige Wert im Format einer dezimalen Zahl codiert. Dabei sind nur negative Zahlen mit einem Vorzeichen zu versehen. Die Codierung des Wertes wird durch ein "#"-Zeichen beendet.

| ASN.1-Definition | Codierung (mehrere Beispiele) |
|---|---|
| Int ::= INTEGER | INTEGER=123# |
| | INTEGER=-123# |

### BIT STRING

Ein Bit String wird durch den Text "BIT STRING" codiert. Die Wertcodierung erfolgt durch eine binäre Auflistung, die mit "{}"-Zeichen eingeschlossen und durch ein vorangestelltes "B" für binär und die Anzahl der codierten Elemente gekennzeichnet wird. Eine hexadezimale Codierung anstelle der Binärcodierung wird entsprechend über ein "H" gekennzeichnet. Falls die Zahl der Bits nicht ein ganzzahliges Vielfaches von vier ist, sind die undefinierten niederwertigen Bits (diese stehen rechts) mit dem binären Wert "0" zu codieren. Sowohl bei der binären als auch bei der hexadezimalen Codierung ist es entsprechend der ASN.1-Definition möglich, auf die Codierung am Ende stehender Elemente zu verzichten, wenn sie mit dem Wert "0" codiert werden.

Bei der erweiterten Codierung werden die Bezeichner der Elemente aufgezählt, deren Binärwert einer "1" entspricht. Dabei wird der Anfang der Aufzählung durch das "{"-Zeichen und das Ende durch das "}"-Zeichen gekennzeichnet. Als Trennelement innerhalb dieser Aufzählung wird ein "/"-Zeichen benutzt.

| ASN.1-Definition | Codierung (mehrere Varianten) |
|---|---|
| BitStr ::= BIT STRING { | BIT STRING=B5{01100} |
| ele(0), | BIT STRING=B3{011} |
| ele(1), | BIT STRING=H2{70} |
| ele(2), | BIT STRING=H1{7} |
| ele(3), | |
| ele(4) } | Erweiterte Codierung: |
| | BIT STRING={ele(1)/ele(2)} |
| | BIT STRING=B5{00000} |
| | BIT STRING=B1{0} |
| | BIT STRING=H1{0} |
| | |
| | Erweiterte Codierung: |
| | BIT STRING={} |

### OCTET STRING

Ein Octet String wird durch den Text "OCTET STRING" codiert. Die Wertcodierung erfolgt durch eine binäre Auflistung, die mit "{}"-Zeichen eingeschlossen wird und durch ein vorangestelltes "B" für binär und die Anzahl der codierten Elemente gekennzeichnet wird. Wahlweise kann auch eine hexadezimale Codierung verwendet werden, die entsprechend über ein "H" gekennzeichnet wird. Als Trennelement zwischen den einzelnen Octet-Werten dient ein "/"-Zeichen.

| ASN. 1-Definition | Codierung |
|---|---|
| OctStr ::= OCTET STRING | OCTET STRING=B2{11100001/11111111} |
| | OCTET STRING=H2{E1/FF} |

### NULL

Die Codierung des ASN.1-Datentyps Null erfolgt durch den Text "NULL=NULL#".

| ASN. 1-Definition | Codierung |
|---|---|
| Null=NULL | NULL=NULL# |

### OBJECT IDENTIFIER

Der ASN.1-Datentyp Object Identifier wird durch den Text "OBJECT IDENTIFIER" codiert. Der Wert wird bei vorangestellter Codierung des Textes "NUMERIC" durch Auflistung der Ordnungsnummern der Knoten im Registrierungsbaum codiert, beginnend vom Wurzelelement bis zum registrierten Element. Getrennt werden die Zahlenwerte dieser Auflistung jeweils durch einen Punkt. Die Codierung des Wertes wird durch ein "#"-Zeichen beendet.

Bei der durch den Text "Symbolic" gekennzeichneten erweiterten Codierung wird anstelle der nicht sehr aussagekräftigen Zahlenfolge ein eindeutiger mnemonischer Bezeichner benutzt. Dazu muß natürlich eine eindeutige bijektive tabellarische Zuordnung zwischen Bezeicher und Object Identifier erstellt werden. Eine Kombination aus mnemonischen Bezeichnern und Ziffernfolge ist nicht zulässig. Die Codierung des Wertes wird durch ein "#"-Zeichen beendet.

| ASN.1-Definition | Codierung |
|---|---|
| Obj ::= OBJECT IDENTIFIER | OBJECT IDENTIFIER=Numeric, 1.2.2.1.4# |
| | Erweiterte Codierung |
| | OBJECT IDENTIFIER=Symbolic, systemId# |

### EXTERNAL

Der Tag des Datentyp External wird durch den Text "EXTERNAL" codiert. Die Wertcodierung dieses Datentypes ergibt sich aus den Codierregeln für die folgende SEQUENCE:

| | | | |
|---|---|---|---|
| SEQUENCE | | | |
| { | | | |
| | direct-reference | | OBJECT IDENTIFIER OPTIONAL, |
| | indirect-reference | | INTEGER OPTIONAL, |
| | data-value-descriptor | | ObjectDescriptor OPTIONAL, |
| | encoding | | CHOICE |
| | { | | |
| | | single-ASN1-type | [0] IMPLICIT ANY, |
| | | octet-aligned | [1] IMPLICIT OCTET STRING, |
| | | arbitrary | [2] IMPLICIT BIT STRING |
| | } | | |
| } | | | |

### REAL

Zahlen im Real-Format werden in wissenschaftlicher Notation codiert. Die Codierung des Wertes wird durch ein "#"-Zeichen beendet.

| ASN.1-Definition | Codierung |
|---|---|
| Real ::= REAL | REAL=1.23E45# |

### ENUMERATED

Der Tag eines Enumerated-Typs wird durch den Text "ENUMERATED" codiert. Die Wertcodierung erfolgt durch die Angabe der mit dem Element verknüpften Integer-Zahl. Die Codierung des Wertes wird durch ein "#"-Zeichen beendet. Bei der erweiterten Codierung wird das Element identisch zu seinem Definitionstext codiert.

| ASN.1-Definition | Codierung |
|---|---|
| Enum ::= ENUMERATED { | ENUMERATED=1# |
| a(0), | |
| b(1), | erweiterte Codierung: |
| c(2) } | ENUMERATED=b(1)# |

### SEQUENCE

Der Tag einer Sequence wird durch den Text "SEQUENCE" codiert. Die Codierung des Wertes einer Sequence beginnt mit der Anzahl der codierten Elemente gefolgt von einem "{"-Zeichen und endet mit einem "}"-Zeichen. Bei der weiteren Spezifikation der Wertcodierung muß zwischen zwei Typen der Sequence unterschieden werden:
Bei der einfachen Sequence werden die in der Sequence enthaltenen ASN.1-Typen in der Reihenfolge ihres Auftretens in der Definition codiert. Dazu werden die Positionsnummern jeweils mit einem Komma abgetrennt vorangestellt. Als Trennelement zwischen diesen Typen wird jeweils ein "/"-Zeichen eingefügt. Nicht benutzte optionale Elemente der Sequence werden bei der Codierung einfach ausgelassen, so daß in diesem Fall dann auch das "/"-Zeichen als Trennelement nicht codiert wird.

| ASN. 1-Definition | Codierung (mehrere Beispiele) | |
|---|---|---|
| Seq ::= SEQUENCE { | SEQUENCE=#/ | 2{1,INTEGER=123 |
| | | 3,INTEGER=456#} |
| a INTEGER, | SEQUENCE= | 3{1,INTEGER=1#/2, |
| | | BOOLEAN=FALSE#/3, |
| | | INTEGER=3#} |
| b BOOLEAN OPTIONAL, | | |
| c INTEGER } | | |

Der Wert einer Sequence of wird definiert, indem der eingeschlossene Datentyp entsprechend oft mit vorangestellter Positionsnummer und durch ein "/"-Zeichen voneinander getrennt codiert wird.

| ASN. 1-Definition | Codierung (mehrere Beispiele) |
|---|---|
| Seq ::= SEQUENCE OF INTEGER | SEQUENCE OF = 3 {1,INTEGER=1#/2, INTEGER=2#/3,INTEGER=3#} |
| | |
| | SEQUENCE=0{} |

### SET

Der Tag des Typs Set wird durch den Text "SET" codiert. Die Codierung des Wertes beginnt mit der Anzahl der codierten Elemente gefolgt von einem "{"- Zeichen und endet mit einem "}"-Zeichen. Bei der weiteren Spezifikation der Wertcodierung muß zwischen zwei Typen des Set-Datentyps unterschieden werden:
Bei dem einfachen Set-Typ werden die in der Definition enthaltenen ASN.1-Typen in der Reihenfolge ihres Auftretens in der Definition codiert. Dazu werden die Positionsnummern jeweils mit einem Komma abgetrennt vorangestellt. Als Trennelement zwischen diesen Typen wird jeweils ein "/"-Zeichen eingefügt. Nicht benutzte optionale Elemente der Set werden bei der Codierung einfach ausgelassen, so daß in diesem Fall auch das "/"-Zeichen als Trennelement nicht codiert wird.

| ASN.1-Definition | Codierung (mehrere Beispiele) |
|---|---|
| Set ::= SET { | SET=2{1,INTEGER=123#/2,BOOLEAN=TRUE#} |
| a INTEGER, | |
| b BOOLEAN, | |
| c OBJECT IDENTIFIER optional } | |

Der Wert für den Typ Set of wird definiert, indem der eingeschlossene Datentyp entsprechend oft mit vorangestellter Positionsnummer und durch ein "/"-Zeichen voneinander getrennt codiert wird.

| | |
|---|---|
| ASN.1-Definition | Codierung (mehrere Beispiele) |
| Set ::= SET OF INTEGER | SET=3{1,INTEGER=1#/2,INTEGER=2#/ |
| | 3,INTEGER=3#} |
| | SET={} |

### Character Strings

Die Codierung für die verschiedenen String-Typen und der davon abgeleiteten Subtypen ist identisch. Der Typ wird entsprechend des Datentyps wahlweise durch den Text "NumericString", "PrintableString", "TeletexString", "VideotexString", "VisibleString ", "IA5String", "GraphicString", "GeneralString", "ObjectDescriptor", "UTCTime" oder GeneralizedTime" codiert.

Solange keine Sonderzeichen sowie nicht codierbare Zeichen enthalten sind, kann die einfache Wertcodierung verwendet werden. Diese wird durch den Text "simple" eingeleitet und mit einem ","-Zeichen abgetrennt, steht die Anzahl der enthaltenen Zeichen. Der Text selber folgt uncodiert in geschweiften Klammern eingeschlossen. Sobald die Codierung mit der einfachen Wertcodierung nicht mehr möglich ist, erfolgt die erweiterte Codierung, die mit "complex" eingeleitet wird. Danach folgt mit einem ","-Zeichen abgetrennt die Codierung der Anzahl der enthaltenen Zeichen gefolgt von einem "{"-Zeichen. Danach werden die Codes der einzelnen Zeichen durch ein "/"-Zeichen voneinander abgetrennt hexadezimal codiert. Beendet wird die Codierung durch ein "}"-Zeichen.

| ASN. 1-Definition | Codierung (mehrere Beispiele) |
|---|---|
| Str ::= GeneralString | GraphicString=simple, 3{xyz} |
| | GeneralString=complex, 3{78/79/7A} |

### CHOICE

Der Typ einer Choice wird durch den Text "CHOICE" codiert. Die Codierung des Wertes einer CHOICE ist ähnlich zu der Codierung einer Sequence und beginnt mit der Zahl "1" für die Anzahl der in dieser Choice codierten Elemente. Die Codierung des enthaltenen Elementes beginnt mit einem "{"-Zeichen und endet mit einem "}"-Zeichen. Vor der Codierung des Types wird dessen Position mit einem Komma abgetrennt codiert.

| ASN.1-Definition | Codierung (mehrere Beispiele) |
|---|---|
| Bsp ::= CHOICE { | CHOICE=1{2,GraphicString= |
| simple.3{A}} | |
| typ1 INTEGER, | CHOICE=1{1,INTEGER=123#} |
| typ2 GraphicString } | |
| ANY DEFINED BY | |

Der Typ ANY DEFINED BY wird durch den String "ANY" definiert. Der Wert eines ANY-Typens wird entgegen zur BER-Codierung als eigener Typ codiert. Da der ANY DEFINED BY Typ nur innerhalb einer SEQUENCE oder eines SET erlaubt ist, zeigt das Beispiel die entsprechende Definition innerhalb einer Sequence Definition. Für die Codierung wird zuerst der Text "1{" codiert und dann der für den ANY-Typen vorgesehene Typ codiert. Die Definition wird durch das "}"-Zeichen abgeschlossen.

| ASN. 1-Definition | Codierung |
|---|---|
| Seq ::= SEQUENCE { | SEQUENCE=2{1, INTEGER=1#/2, |
| | ANY={INTEGER=5#}} |
| | |
| i INTEGER; | |
| a ANY DEFINED BY i } | |

Informationsmodell referenzieren Entgegen der Klartextcodierung, die sich auch ohne Kenntnis des Informationsmodells decodieren läßt, ist für eine BER-Codierung eine in Metadaten-Format abgespeicherte Referenz des Informationsmodells notwendig. Um auch innerhalb der Klartextcodierung die Inforamtion über die zu benutzenden Metadaten codieren zu können, läßt sich optional jeder Typencodierung die zu verwendende Metadaten voranstellen. Diese Metadaten sind dann nur für diesen und die darin enthaltenen Typen gültig.

| ASN.1-Definition | Codierung |
|---|---|
| Bsp ::= INTEGER | SetMetaData=Dateiname, INTEGER=123# |

## Patentansprüche

1. Verfahren zur Übertragung von Informationen, deren Aufbau durch die mit Abstrakte Syntax-Notation Eins (ASN.1) bezeichnete formale Sprache zur Definition von Datenstrukturen definiert ist, **dadurch gekennzeichnet, daß** die Übertragung in als Text codierter Form erfolgt.

2. Verfahren nach Anspruch 1, **dadurch gekennzeichnet, daß** eine Klartext-Codierung erfolgt.

3. Verfahren nach Anspruch 2, **dadurch gekennzeichnet, daß** zu jeweils einer zu übertragenen Information die Bezeichnung des jeweils nach ASN.1 definierten Datentyps übertragen wird.

4. Verfahren nach Anspruch 3, **dadurch gekennzeichnet, daß** die Bezeichnung vorangestellt und durch ein vorgegebenes Trennzeichen von der Information getrennt wird.

5. Verfahren nach Anspruch 4, **dadurch gekennzeichnet, daß** das vorgegebene Trennzeichen ein Gleichheitszeichen ist.

6. Verfahren nach einem der vorhergehenden Ansprüche, **dadurch gekennzeichnet, daß** die als Text codierte Form der Information mit Hilfe einer standardmäßig verfügbaren Ausgabeeinrichtung darstellbar ist.

7. Verfahren nach einem der vorhergehenden Ansprüche, **dadurch gekennzeichnet, daß** die mittels CMIP zu übertragenen Informationen das Management öffentlicher Telekommunikationsnetze betreffen.

8. Verfahren nach einem der vorhergehenden Ansprüche, **dadurch gekennzeichnet, daß** die Informationen zwischen einem Teilnehmer und einem öffentlichen Telekommunikationsnetz übertragen werden und ein vom Teilnehmer durchzuführendes Management des Telekommunikationsnetzes betreffen.

9. Verfahren nach einem der vorhergehenden Ansprüche, **dadurch gekennzeichnet, daß** eine eMail-Schnittstelle für die textcodierten Informationen gebildet wird.

10. Verfahren nach einem der vorhergehenden Ansprüche, **dadurch gekennzeichnet, daß** die Codierung durch die Verwendung von Codiertabellen flexibel an den Zeichenvorrat des Übertragungssystems anpaßbar ist.

11. Verfahren nach einem der vorhergehenden Ansprüche, **dadurch gekennzeichnet, daß** das Codieren und Versenden der Managementinformationen sowie das Empfangen und Decodieren derselben automatisch erfolgen.

## Claims

1. Method for the transmission of information, the structure of said information being defined by the formal language for the definition of data structures known as Abstract Syntax Notation One (ASN.1), **characterized in that** transmission takes place in a form coded as text.

2. Method according to claim 1, **characterized in that** coding is in plain text.

3. Method according to claim 2, **characterized in that**, for each item of information to be transmitted, the description of the data type, defined in each case according to ASN.1, is transmitted.

4. Method according to claim 3, **characterized in that** the description is included as a prefix and is separated from the information by a predetermined separator.

5. Method according to claim 4, **characterized in that** the predetermined separator is an equals sign.

6. Method according to any one of the preceding claims, **characterized in that** the form of the information coded as text can be represented by means of a standardly available output means.

7. Method according to any one of the preceding claims, **characterized in that** the items of information to be transmitted by means of CMIP relate to the management of public telecommunications networks.

8. Method according to any one of the preceding claims, **characterized in that** the items of information are transmitted between a subscriber and a public telecommunications network and relate to a management of the telecommunications network to be performed by the subscriber.

9. Method according to any one of the preceding claims, **characterized in that** an email interface is formed for the text-coded items of information.

10. Method according to any one of the preceding claims, **characterized in that** the coding is flexibly adaptable to the character set of the transmission system through the use of coding tables.

11. Method according to any one of the preceding claims, **characterized in that** the coding and sending of the management information as well as the receiving and decoding thereof take place automatically.

## Revendications

1. Procédé de transmission d'informations dont la structure est définie par le langage formel désigné par la notation de syntaxe abstraite numéro 1 (ASN.1), pour définir des structures de données, **caractérisé en ce que** la transmission intervient sous forme de texte codé.

2. Procédé selon la revendication 1, **caractérisé en ce qu'**un codage en clair des textes intervient.

3. Procédé selon la revendication 2, **caractérisé en ce que** la désignation du type de données respectivement défini selon ASN. est transmise pour respectivement une des informations à transmettre.

4. Procédé selon la revendication 3, **caractérisé en ce que** la désignation précède l'information et est séparée de celle-ci par un signe de séparation prédéfini.

5. Procédé selon la revendication 4, **caractérisé en ce que** le signe de séparation prédéfini est un signe d'égalité.

6. Procédé selon l'une des revendications précédentes, **caractérisé en ce que** l'information sous forme de texte codé est visualisable à l'aide d'un dispositif de sortie standard disponible.

7. Procédé selon l'une des revendications précédentes, **caractérisé en ce que** les informations à transmettre à l'aide de CMIP concernent la gestion de réseaux publics de télécommunications.

8. Procédé selon l'une des revendications précédentes, **caractérisé en ce que** les informations sont transmises entre un abonné et un réseau public de télécommunications et concernent une gestion du réseau de télécommunications à effectuer par l'abonné.

9. Procédé selon l'une des revendications précédentes, **caractérisé en ce qu'**une interface de courrier électronique est générée pour les informations codées en texte.

10. Procédé selon l'une des revendications précédentes, **caractérisé en ce que** l'utilisation de tableaux de codage permet d'adapter, de manière souple, le codage au jeu de caractères du système de transmission.

11. Procédé selon l'une des revendications précédentes, **caractérisé en ce que** le codage et l'envoi des informations de gestion ainsi que la réception et le décodage de celles-ci s'effectuent de manière automatique.
